# EUROPEAN PATENT SPECIFICATION

(11) **EP 1 188 954 B1**
(45) Date of publication and mention of the grant of the patent: **07.06.2006**
(21) Application number: 01203409.6
(22) Date of filing: 10.09.2001
(51) Int. Cl.: F16G 13/16

(54) **Cable supporting chain with motion along different axes**
Kabelführungskette mit Bewegung um verschiedene Achsen
Chaîne de support de câbles mobile selon differents axes

(30) Priority: 14.09.2000 IT MI001998
(43) Date of publication of application: 20.03.2002
(73) Proprietor: Mauri, Giovanni, 20052 Monza (IT)
(72) Inventor: Mauri, Giovanni, 20052 Monza (IT)
(74) Representative: Riccardi, Sergio

(56) References cited:
- EP-A- 0 277 389
- DE-A- 19 839 575
- DE-C- 4 428 680
- DE-C- 19 701 706

## Description

The present invention relates to a cable supporting chain with motion along different axes.

The cable supporting chains for conveying energy have been known since a long time to meet particular needs of electric supply even on very complex machinery for various applications such as robotics, transport of objects or persons and industrial machines with moving elements that can hardly be supplied with other means.

More particularly in case of application on machinery having a spiral motion, for instance on assist ladders for transporting handicapped people or machines carrying out combined motions on at least two (longitudinal and transversal) axes, use of said chains was never easy because of their impossibility to follow the particular geometry involved in the rotary translatory movements of the above mentioned applications. Indeed in this case it was often chosen to use other means for transporting energy such as whiping contacts.

Although said whiping contacts solve the mentioned technical problems, they have however some drawbacks.

Indeed said contacts are not very reliable in feeding current because they are extremely vulnerable in humid or cold environments and in presence of chemical agents.

A cable supporting chain comprising a plurality of flexible links connected together is disclosed in document DE 44 28 680. Each link is provided with a plug connection to be inserted in the corresponding plug mount of the adjacent link, in order to connect together the links and limit the relative longitudinal movement between the links. However, this particular connection means between the links and the flat shape of each link surface does not allow the chain to be bent with a small radius of curvature.

An object of the present invention is to remove the drawbacks of the prior art.

Therefore object of the present invention is to provide a cable supporting chain with motion along different axes of easy production and use, that can be easily used on machines or plants having said motions along different axes or spiral movements such as assist ladders for moving objects or persons.

Briefly the present invention provides for a cable supporting chain with motion along different axes comprising a plurality of links operatively associated to each other, wherein said links carry out a mutual joint formed by the cooperation of concave and convex or in any case complementary surfaces that can be moved one relative to the other along different axes.

The cable supporting chain with motion along different axes according to the invention is characterized by comprising the features set forth in claim 1.

The links of said chain can advantageously move one relative to the other along different axes because each link comprises a body having a couple of male and female ends, wherein said male end has surfaces of rotation to be assimilated to cylinders and convex surfaces adapted to be coupled with corresponding cavities and concave surfaces belonging to said female end.

Advantageously said links can move one relative to the other along different axes also because each link comprises a body having a couple of convex annular surfaces and a couple of annular appendices where said couples of said links are associated together through an annular insert made of plastic material, said insert having on one side concave surfaces properly shaped for being coupled to said annular convex surfaces and on the other side a surface adapted to receive a pin to fix the assembly of said couples of said adjacent links.

With the chain of the present invention the advantage of a reliable production at controlled costs is obtained because the links of said chain are made of plastic material.

Further features, advantages and details of the cable supporting chain with motion along different axes according to the invention will be better understood by reading the following description made with reference to the accompanying drawings in which a preferred embodiment of the invention is shown as an illustrative but not limiting example.
- Fig. 1 is a perspective view of an embodiment of a link of the chain not forming part of the invention, but representing background art useful for understanding the invention.
- Fig. 2 is a perspective view of an embodiment of a link of the chain having the features according to the present invention.

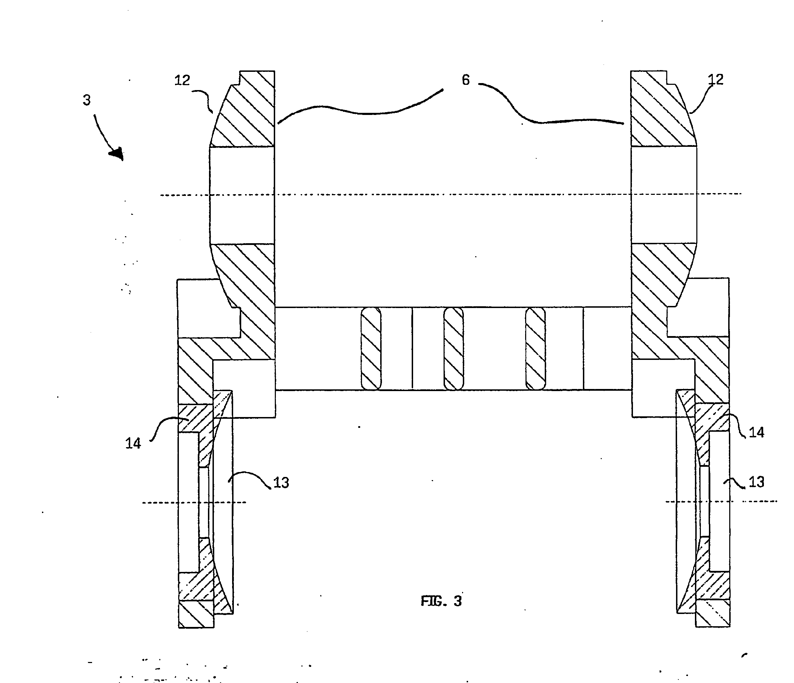

- Fig. 3 is a sectional view of the link shown in Fig. 2.
- Fig. 4 is a first perspective explanatory view of the motion of the cable supporting chain of the invention.
- Fig. 5 is a second explanatory perspective view of the motion of the chain of the invention.

With reference to the above mentioned figures of the drawings, the cable supporting chain 1 for motion along different axes comprises a plurality of links, preferably made of plastic material and operatively associated to each other, said links carrying out a particular mutual joint formed by cooperation of concave and convex or anyway complementary surfaces.

Said joint allows the chain 1 made by joining said links, to carry out a combined motion along different axes due to the mutual movement between adjacent links.

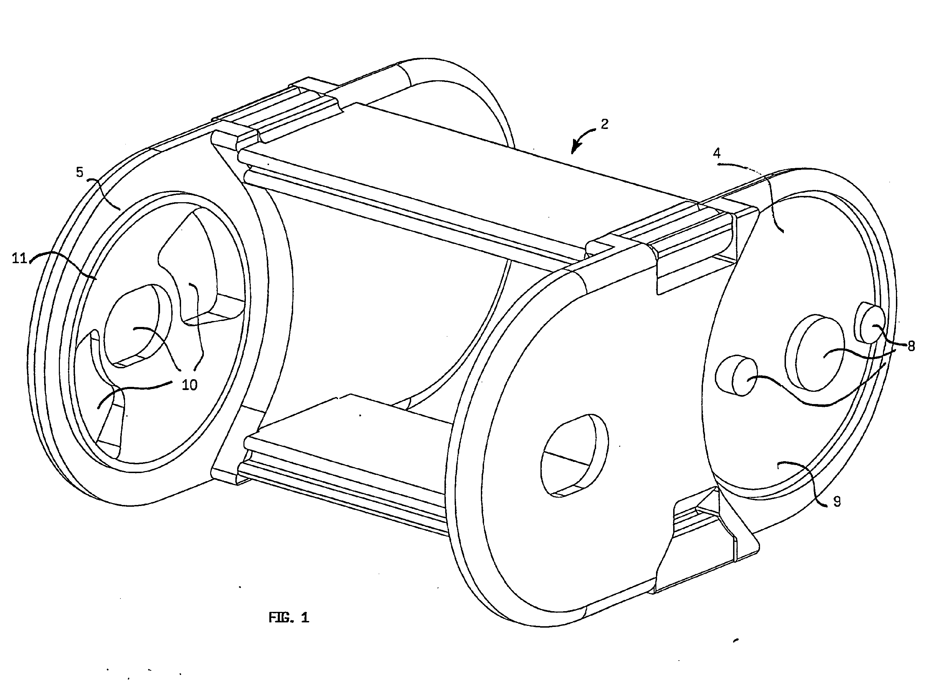

More particularly in the embodiment shown in Figure 1, not forming part of the invention but representing background art useful for understanding the invention; each link 2 of the chain 1 has a body provided with a couple of male and female ends 4, 5 respectively. The male end 4 has rotation surfaces 8 to be assimilated to cylinders and convex surfaces 9, adapted to be coupled with corresponding cavities 10 and concave surfaces 11 respectively, belonging to the female end 5.

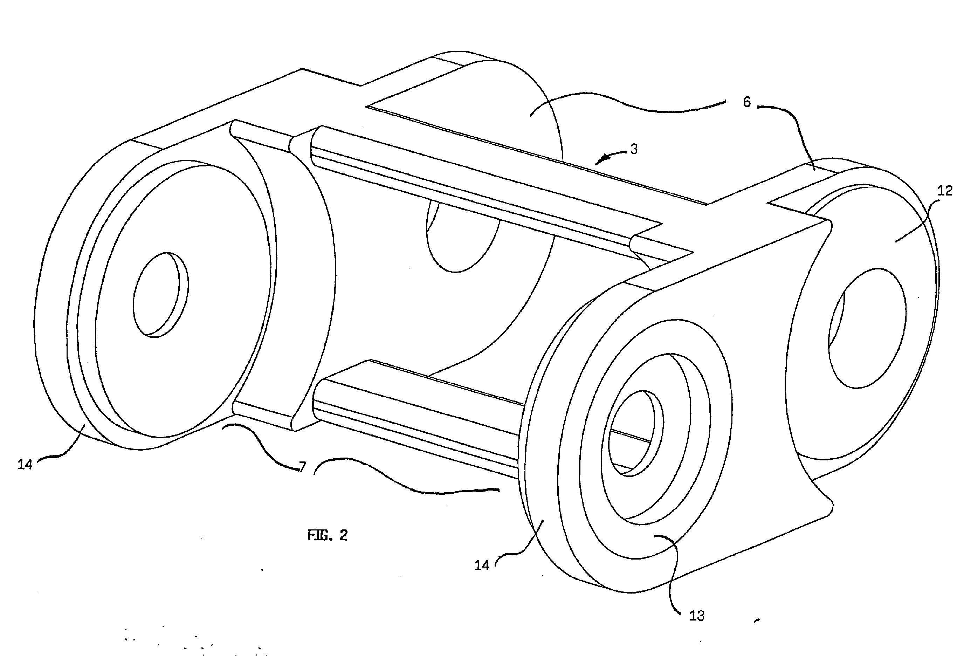

In the embodiment shown in Figure 2 according to the present invention, each link 3 has a body provided with a couple 6 of annular convex surfaces 12 and a couple 7 of annular appendices 14. The couples 6 and 7 of the links 3 are associated to each other through a similarly annular plastic insert 13 having on one side concave surfaces properly shaped for being associated to said annular surfaces 12 and on the other side a surface adapted to receive a pin (not shown) for fastening the assembly of couples 6, 7 of adjacent links.

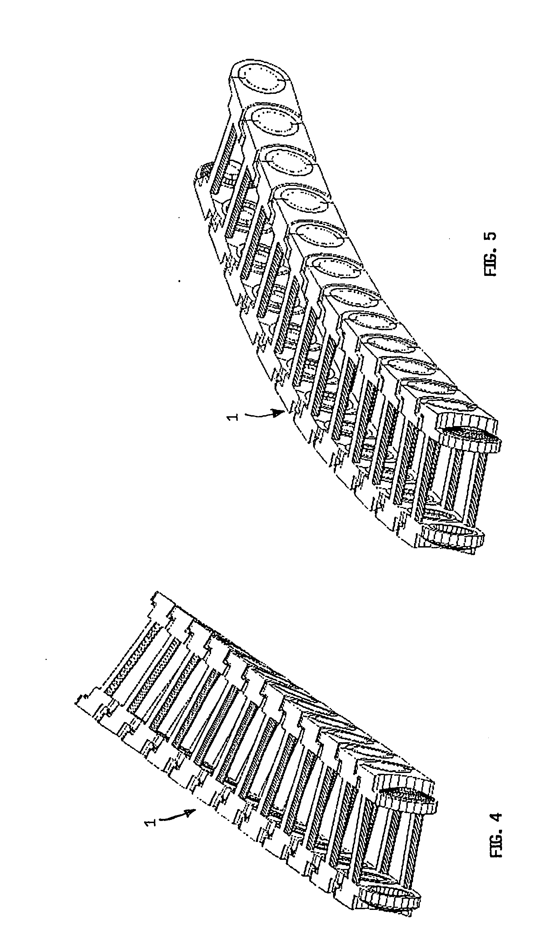

On use of the chains comprising the above described links, the particular cooperation between the surfaces of the male and female ends 4, 5 of said links 2 or between the annular surfaces 12, the insert 13 and the appendices 14 of said links 3 makes possible a movement of the entire chain along different axes as shown in Figs 4 and 5.

In this way it is possible to obtain inside the chain 1 through suitable cables or ducts arranged inside the chain, the passage of energy, gas or liquids warranting their use to the user machine connected at the end of the chain, independently from the chain movements, such as along more axes, spiral motion and so forth.

Moreover this operation is warranted independently from the operative conditions of the environment, because as it is well known from the other fields of use of the cable supporting chains, said chains and the users supplied thereby are practically free from any environmental change.

It is clear that many modifications, adaptations, integrations, variations and substitutions may be made to the embodiments previously described as illustrative and non limiting examples, however without falling outside the scope of the present invention as set forth in the appended claims.

## Claims

1. A cable supporting chain with motion along different axes, comprising a plurality of links (3) operatively associated to each other, said links (3) being connected to each other by a joint formed by cooperation of concave and convex surfaces allowing the links to move one relative to the other along different axes, **characterized in that** each link (3) comprises a body having a couple (6) of annular convex surfaces (12) and a couple (7) of annular appendices (14).

2. The cable supporting chain with motion along different axes according to claim 2, **characterized in that** said couplers (6, 7) of said links (3) are mutually associated through an insert (13).

3. The cable supporting chain with motion along different axes according to claim 3, **characterized in that** said insert (13) has an annular shape, made of plastic material and it is provided on one side with concave surfaces properly shaped to be associated with said annular convex surfaces (12) and on the other side with a surface adapted to receive a pin to fix the assembly of said couples (6, 7) of adjacent links (3).

## Patentansprüche

1. Kabelführungskette mit Bewegung um verschiedene Achsen, bestehend aus einer Mehrzahl von bewegend einander zugeordneten Gliedern (3), wobei diese Glieder (3) miteinander verbunden sind durch ein Gelenk, das durch das Zusammenwirken von konkaven und konvexen Flächen gebildet wird, die es ermöglichen, dass sich die Glieder relativ zueinander um verschiedene Achsen bewegen, **dadurch gekennzeichnet, dass** jedes Glied (3) einen Körper mit einem Paar (6) ringförmiger konvexer Flächen (12) und einem Paar (7) ringförmiger Anhänge (14) umfasst.

2. Kabelführungskette mit Bewegung um verschiedene Achsen gemäß Anspruch 1, **dadurch gekennzeichnet, dass** die Paare (6, 7) der Glieder (3) durch einen Einsatz (13) wechselseitig zugeordnet sind.

3. Kabelführungskette mit Bewegung um verschiedene Achsen gemäß Anspruch 2, **dadurch gekennzeichnet, dass** der Einsatz (13) ringförmig ist, aus Kunststoff gefertigt ist und auf der einen Seite mit konkaven Flächen versehen ist, die in geeigneter Weise so geformt sind, dass sie den ringförmigen konvexen Flächen (12) zugeordnet werden, und auf der anderen Seite mit einer Fläche, die geeignet ist, einen Stift aufzunehmen, um den Zusammenbau der Paare (6, 7) benachbarter Glieder (3) zusammenzuhalten.

## Revendications

1. Chaîne de support de câble avec un mouvement le long d'axes différents, comprenant plusieurs éléments de liaison (3) fonctionnellement associés les uns aux autres, lesdits éléments de liaison (3) étant reliés les uns aux autres par un joint formé par la coopération de surfaces concaves et convexes permettant aux éléments de liaison de se déplacer les uns relativement aux autres le long d'axes différents, **caractérisée en ce que** chaque élément de liaison (3) comprend un corps possédant un couple (6) de surfaces convexes annulaires (12) et un couple (7) d'appendices annulaires (14).

2. Chaîne de support de câble avec un mouvement le long d'axes différents selon la revendication 2, **caractérisée en ce que** lesdits couples (6, 7) desdits éléments de liaison (3) sont mutuellement associés par un insert (13).

3. Chaîne de support de câble avec un mouvement le long d'axes différents selon la revendication 3, **caractérisée en ce que** ledit insert (13) a une forme annulaire, réalisé en matériau plastique, et il présente sur un côté des surfaces concaves configurées d'une manière appropriée pour être associées auxdites surfaces convexes annulaires (12) et, sur l'autre côté, une surface apte à recevoir un axe pour fixer l'ensemble desdits couples (6, 7) d'éléments de liaisons adjacents (3).
